(19) Europäisches Patentamt / European Patent Office / Office européen des brevets

(11) **EP 2 443 323 B1**

(12) **EUROPÄISCHE PATENTSCHRIFT**

(45) Veröffentlichungstag und Bekanntmachung des Hinweises auf die Patenterteilung:
**03.08.2016 Patentblatt 2016/31**

(21) Anmeldenummer: **08872370.5**

(22) Anmeldetag: **03.11.2008**

(51) Int Cl.:
*F01K 9/00* (2006.01)     *F28B 9/08* (2006.01)
*F28B 11/00* (2006.01)     *G05D 9/12* (2006.01)
*F01K 9/02* (2006.01)     *G01F 23/00* (2006.01)
*G01F 23/16* (2006.01)     *G01F 23/18* (2006.01)
*G01L 15/00* (2006.01)

(86) Internationale Anmeldenummer:
**PCT/EP2008/009255**

(87) Internationale Veröffentlichungsnummer:
**WO 2009/100742 (20.08.2009 Gazette 2009/34)**

(54) **KONDENSATIONSDAMPFTURBINE MIT FÜLLSTANDSFASSUNGSEINRICHTUNG UND VERFAHREN ZUR REGELUNG DES FÜLLSTANDES**

CONDENSATION STEAM TURBINE COMPRISING A LEVEL DETECTION DEVICE, AND A METHOD FOR REGULATING THE LEVEL

TURBINE À VAPEUR DE CONDENSATION POURVUE D'UN DISPOSITIF DE SAISIE DE NIVEAU DE REMPLISSAGE ET PROCÉDÉ DE RÉGULATION DU NIVEAU DE REMPLISSAGE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.02.2008 DE 102008008637**

(43) Veröffentlichungstag der Anmeldung:
**25.04.2012 Patentblatt 2012/17**

(73) Patentinhaber: **MAN Diesel & Turbo SE 86153 Augsburg (DE)**

(72) Erfinder:
• **RADEMACHER, Bernhard 46242 Bottrop (DE)**
• **BUSCHMANN, Holger 46535 Dinslaken (DE)**

(56) Entgegenhaltungen:
**EP-A1- 1 288 567     DE-B- 1 113 459
US-A- 4 202 367**

• **"LEVEL MONITORING", POWER, MCGRAW-HILL COMPAGNY, NEW YORK, NY, US, Bd. 134, Nr. 9, 1. September 1990 (1990-09-01), Seiten 41-42,46,48, XP000207957, ISSN: 0032-5929**

**Beschreibung**

Die vorliegende Erfindung bezieht sich auf Kondensationsdampfturbinen mit Kondensatspeicher.

In Kondensationsdampfturbinen wird das dampfförmige Arbeitsfluid nach Durchströmen der Turbine wenigstens teilweise kondensiert. Dieses kondensierte Arbeitsfluid wird in einem Kondensatspeicher zwischengespeichert, aus dem es vorzugsweise durch eine Kondensatpumpe abgeführt wird.

Dabei soll sowohl ein Über- als auch ein Leerlaufen des Kondensatspeichers und ein damit verbundenes Trockenlaufen der Kondensatpumpe verhindert werden. Hierzu ist eine Füllstandsregelung erforderlich, die die Füllstandshöhe des kondensierten Arbeitsfluides im Kondensatspeicher zwischen einem unteren und einem oberen Grenzwert hält. Eine solche Füllstandsregelung benötigt als Ist-Größe die aktuell im Kondensatspeicher vorliegende Füllstandshöhe des kondensierten Arbeitsfluides.

Aus der DE 40 22 544 A1 ist eine solche Kondensatfüllstandsregelung grundsätzlich bekannt. Die Druckschrift macht keine zur Erfassung der aktuell vorliegenden Füllstandshöhe. Diese geht auch nicht aus der DE 28 16 636 hervor, die sich ebenfalls mit einer Kondensationsdampfturbine befasst.

Aus der US 4,202,367 ist eine Schaltanordnung für die Regelung eines Flüssigkeitsniveaus aus in Behältern beschrieben, welche vor allem für ein Regeln des Niveaus des Kondensates in Regenerationserwärmern und Kondensatoren von Dampfturbinen geeignet ist.

In der DE 1113 459 wird eine Einrichtung zur Vergrößerung der Speicherfähigkeit einer in Blockschaltung arbeitenden Dampfkraftanlage mit Kessel und einer Turbine mit umgesteuerter Entnahme für Speisewasservorwärmung durch Entnahmedampf beschrieben.

Das Dokument "Level Monitoring" aus dem Jahr 1990 offenbart eine Füllstandsmessung über den Differenzdruck zweier mit Flanschanschlüssen unmittelbar an einen Flüssigkeitsbehälter befestigten Druckmessumformer.

Die vorgenannten Dokumente aus dem Stand der Technik offenbaren alle keinen Beruhigungsbehälter, der mit dem Kondensatspeicher kommuniziert und dessen Druck durch eine Druckerfassungseinrichtung erfasst wird.

Aus betriebsinterner Praxis ist es bisher bekannt, zur Füllstandsmessung einen Schwimmkörper einzusetzen, der an der Oberfläche des kondensierten Arbeitsfluides schwimmt und dessen geodätische Höhe, beispielsweise elektromagnetisch oder optisch, abgegriffen wird. Solche Schwimmer sind jedoch empfindliche und vergleichsweise teuere Bauteile, die bereits bei der Inbetriebnahme oder im Betrieb häufig beschädigt werden. Der Ersatz dieser teuren Bauteile bedingt einen aufwändigen Ein- und Ausbau sowie ggf. eine Neukalibrierung der damit verbundenen Messeinheit, die zu entsprechenden Stillstandzeiten der Kondensationsdampfturbine führt.

Aufgabe der vorliegenden Erfindung ist es daher, die Füllstandshöhe eines kondensierten Arbeitsfluides einer Kondensationsdampfturbine in einem Kondensatspeicher einfach und zuverlässig zu erfassen.

Zur Lösung dieser Aufgabe ist eine Kondensationsdampfturbine nach dem Oberbegriff des Anspruchs 1 durch dessen kennzeichnende Merkmale weitergebildet. Anspruch 7 beansprucht das entsprechende Regelverfahren.

Eine Kondensationsdampfturbine nach der vorliegenden Erfindung umfasst alle Merkmale des unabhängigen Anspruchs 1, unter Anderem einen Kondensatspeicher zur Speicherung von kondensiertem Arbeitsfluid der Kondensationsdampfturbine. Bei dem Arbeitsfluid kann es sich insbesondere um Wasser bzw. Wasserdampf handeln. Die Kondensationsdampfturbine umfasst weiter eine Füllstandserfassungseinrichtung zur Erfassung des Füllstandes in dem Kondensatspeicher.

Hierzu umfasst die Füllstandserfassungseinrichtung eine erste Druckerfassungseinrichtung zur Erfassung eines ersten Druckes P1 des kondensierten Arbeitsfluides in einer ersten geodätischen Höhe im Kondensatspeicher sowie eine zweite Druckerfassungseinrichtung zur Erfassung eines zweiten Druckes P0 oberhalb einer zweiten, größeren geodätischen Höhe im Kondensatspeicher.

Die erste Höhe ist bevorzugt im Bereich zwischen einer untersten Bodenfläche des Kondensatspeichers und einer minimalen Füllstandshöhe des Kondensatspeichers gewählt, so dass die erste Druckerfassungseinrichtung den Druck des kondensierten Arbeitsfluides in einem unteren Bereich des Kondensatspeichers erfasst.

Die zweite Höhe muss oberhalb der maximalen Füllstandshöhe im Dampfbereich angeordnet sein, so dass die zweite Druckerfassungseinrichtung im Normalfall den über dem kondensierten Arbeitsfluid im Kondensatspeicher anliegenden Druck erfasst. Dieser zweite Druck kann insbesondere (bei einem zur Umgebung offenen Kondensatspeicher) der Umgebungsdruck oder (bei geschlossenem Kondensatspeicher) der im Abdampf der Kondensationsdampfturbine herrschende Druck sein.

Erfindungsgemäß bildet eine Auswerteeinrichtung die Druckdifferenz $\Delta P = P1 - P0$ zwischen dem ersten und zweiten Druck. Diese Druckdifferenz resultiert aus der auf der Bodenfläche des Kondensatspeichers lastenden Arbeitsfluidsäule und ist damit proportional zur Füllstandshöhe. Näherungsweise gilt für die Füllstandshöhe h:

$$h = \Delta P / (\rho \times g)$$

wobei $\rho$ die Dichte des kondensierten Arbeitsfluides und g die Erdbeschleunigung bezeichnet, die ungefähr 9,81

m/s$^2$ beträgt.

Die Auswerteeinrichtung gibt ein dieser Druckdifferenz entsprechendes Ausgabesignal aus, das aufgrund der vorstehend erläuterten Zusammenhänge mit der Füllstandshöhe korrespondiert. Dieses Ausgabesignal kann beispielsweise ein analoges Signal sein, das proportional zur Druckdifferenz ist. Insbesondere kann die Druckdifferenz entsprechend der oben angegebenen Formel in eine Füllstandshöhe umgerechnet werden und als Ausgabesignal ein Strom- bzw. Spannungssignal ausgegeben werden, dessen Größe proportional zu dieser Füllstandshöhe ist. Alternativ können die Druckerfassungseinrichtungen und/oder die Auswerteeinrichtung auch digitale Signale ausgeben.

Das von der Auswerteeinrichtung ausgegebene Ausgabesignal kann proportional zur absoluten Füllstandshöhe sein. Gleichermaßen kann es sich hierbei um ein diskretes Signal handeln, das die Füllstandshöhe in bestimmten Diskretisierungsstufen anzeigt. Sowohl ein proportionales als auch ein diskretes Ausgabesignal kann die absolute Füllstandshöhe angeben oder beispielsweise auf den Bereich zwischen einer minimalen und einer maximalen Füllstandshöhe skaliert sein.

Durch diese Füllstandserfassungseinrichtung wird die Füllstandshöhe in einfacher und zuverlässiger Weise erfasst.

Erfindungsgemäß kommuniziert der Kondensatspeicher mit einem Beruhigungsbehälter, wobei die erste und/oder zweite Druckerfassungseinrichtung den Druck in diesem Beruhigungsbehälter erfasst. Der Beruhigungsbehälter kann dabei über Drosselstellen mit dem Kondensatspeicher kommunizieren, so dass Schwankungen des kondensierten Arbeitsfluides im Kondensatspeicher gefiltert werden und im Beruhigungsbehälter das kondensierte Arbeitsfluid einen im Wesentlichen ebenen Pegel aufweist. Dies verringert vorteilhaft Schwankungen der von der Füllstandserfassungseinrichtung erfassten Füllstandshöhe, die nicht auf einer tatsächlichen Änderung der im Kondensatspeicher gespeicherten Menge kondensierten Arbeitsfluides beruhen, sondern aus Störungen des Pegels des kondensierten Arbeitsfluides im Kondensatspeicher oder dergleichen resultieren, wie sie beispielsweise durch den auf den Pegel treffenden Abdampf induziert werden können.

Erfindungsgemäß umfasst die erste und/oder zweite Druckerfassungseinrichtung einen Druckmessumformer, der einen auf einer Erfassungsfläche lastenden Druck in ein analoges oder digitales Strom- bzw. Spannungssignal umwandelt. Solche Druckmessumformer sind als Standardbauteile kostengünstig. Bevorzugt weisen sie einen Flanschanschluss auf, mit dem ihre Erfassungsfläche an der Druckmessstelle mit dem Kondensatspeicher bzw. dem Beruhigungsbehälter einfach verbindbar ist, die zu diesem Zweck entsprechende Gegenflansche aufweisen können.

Vorteilhafterweise können solche Druckmessumformer auch robuster ausgebildet sein. Insbesondere müssen in ihnen keine beweglichen Teile vorgesehen sein. Ein weiterer Vorteil kann darin liegen, dass bei einem Defekt nur der Druckmessumformer selber ausgetauscht werden muss, ein Neukalibrieren beim Hersteller mit den damit verbundenen Standzeiten der Kondensationsdampfturbine jedoch entfällt.

Solche Druckmessumformer können auch mindestens dieselbe, bevorzugt eine höhere Genauigkeit wie die bisher bekannte Erfassung durch Schwimmkörper leisten.

Die Füllstandshöhe im Kondensatspeicher soll im Regelfall zwischen einem unteren und einem oberen Grenzwert gehalten werden. In einer bevorzugten Ausführung weist eine erfindungsgemäße Kondensationsdampfturbine hierzu eine Kondensatpumpe auf, die kondensiertes Arbeitsfluid aus dem Kondensatspeicher fördert und durch eine Füllstandsregeleinrichtung aktuiert wird, die das Ausgabesignal von der Auswerteeinrichtung erhält. Die Füllstandsregeleinrichtung kann dabei das Fördervolumen der Kondensatpumpe entsprechend des Ausgabesignals ändern. Hierzu kann in der Füllstandsregeleinrichtung das Fördervolumen beispielsweise proportional zum Ausgabesignal, zu dessen Änderung über der Zeit und/oder dessen Integral über der Zeit vorgegeben werden.

Fällt also der Füllstand, so reduziert die Füllstandsregeleinrichtung das Fördervolumen der Kondensatpumpe, so dass weniger kondensiertes Arbeitsfluid aus dem Kondensatspeicher abgeführt wird und ein Leerlaufen des Kondensatspeichers und ein Trockenlaufen der Kondensatpumpe verhindert wird. Steigt umgekehrt der Füllstand im Kondensatspeicher, so erhöht die Füllstandsregeleinrichtung das Fördervolumen der Kondensatpumpe, um ein Überlaufen des Kondensatspeichers zu verhindern.

Zusätzlich oder alternativ kann eine Füllstandsregeleinrichtung im Kondensatspeicher auch weiteres kondensiertes Arbeitsfluid, beispielsweise Frischwasser oder dergleichen, zuführen, um den Füllstand im Kondensatspeicher zwischen einem unteren und oberen Grenzwert zu halten.

Weitere Vorteile, Merkmale und Aufgaben der vorliegenden Erfindung ergeben sich aus den Unteransprüchen und den nachfolgend beschriebenen Ausführungsbeispielen. Hierzu zeigt, teilweise schematisiert, die einzige

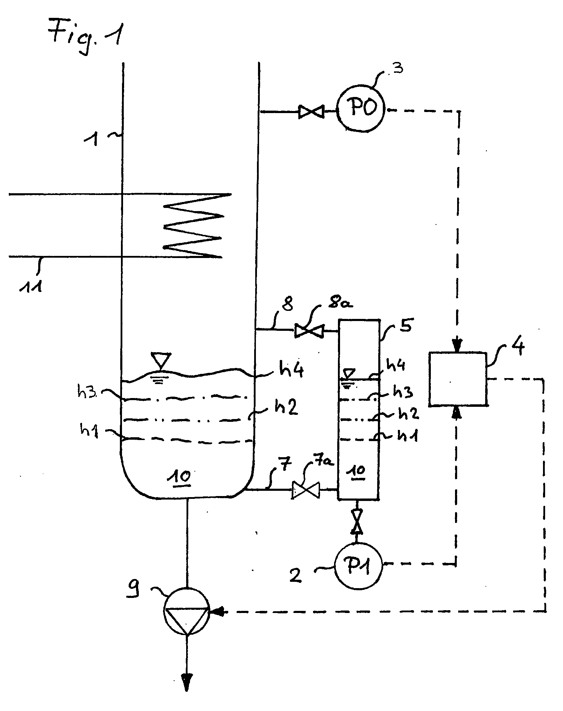

Fig. 1     einen Kondensatspeicher und eine Füllstandsregeleinrichtung einer Kondensationsdampfturbine nach einer Ausführung der vorliegenden Erfindung.

Fig. 1 zeigt einen Kondensatspeicher 1 und eine Füllstandsregeleinrichtung 4 einer (im Übrigen nicht dargestellten) Kondensationsdampfturbine.

Abdampf aus der Kondensationsdampfturbine wird durch eine Kühlung 11 kondensiert und sammelt sich als kondensiertes Arbeitsfluid 10 am Boden des Kondensatspeichers 1. Aus diesem kann es durch eine Kondensatpumpe 9 gefordert werden, um beispielsweise wieder dem Kreisprozess zugeführt zu werden.

Ein Pegel des kondensierten Arbeitsfluides 10, der in Fig. 1 durch eine durchgezogene Linie dargestellt ist, wird durch den beaufschlagenden Abdampf, von der Kühlung 11 herabtropfendes kondensiertes Arbeitsfluid und dergleichen, gestört. Daher ist der Kondensatspeicher 1 mit einem Beruhigungsbehälter 5 über eine erste Leitung 7 und eine zweite Leitung 8 verbunden, wobei die erste Leitung 7 in der Nähe einer Bodenfläche des Kondensatspeichers 1 und die zweite Leitung 8 über einer maximalen, durch eine durchgezogene Linie dargestellte Füllstandshöhe mit dem Kondensatspeicher 1 kommuniziert. In der ersten und zweiten Leitung 7, 8 sind Absperrarmaturen 7a bzw. 8a (oder, in einer nicht dargestellten Abwandlung, Drosselblenden) angeordnet, so dass Druckschwankungen im Kondensatspeicher 1 gefiltert werden und das im Beruhigungsbehälter 5 vorhandene kondensierte Arbeitsfluid einen im Wesentlichen ungestörteren Pegel, i.e. eine gleichmäßigere Füllstandshöhe, aufweist. Durch die vorstehend beschriebenen Störungen verursachte Druckschwankungen werden damit nur in verminderter Form fälschlich als Füllstandshöhenänderungen erfasst.

Aufgrund des Prinzips kommunizierender Röhren stellt sich im Beruhigungsbehälter 5 ein (ungestörterer) Pegel des kondensierten Arbeitsfluides 10 auf derselben geodätischen Höhe ein wie im Kondensatspeicher 1. In Fig. 1 sind neben dem im Ausführungsbeispiel gerade vorliegenden Pegel, der einer maximalen Füllstandshöhe h4 entspricht, exemplarisch weitere Füllstandshöhen h1 bis h3 eingezeichnet, wobei eine unterste Füllstandshöhe h1 gleichzeitig eine minimale zulässige Füllstandshöhe bezeichnet.

Ein erster Druckmessumformer 2 ist über eine Flanschverbindung mit dem Boden des Beruhigungsbehälters 5 verbunden und gibt ein Spannungssignal an eine in der Füllstandsregeleinrichtung 4 implementierte Auswerteeinrichtung (nicht dargestellt) aus, das proportional zu dem von dem ersten Druckmessumformer 2 erfassten Druck P1 des auf der Bodenfläche des Beruhigungsbehälters 5 lastenden kondensierten Arbeitsfluides 10 ist.

Ein zweiter Druckmessumformer 3 ist über eine Flanschverbindung oberhalb der maximalen Füllstandshöhe h4 mit dem Kondensatspeicher 1 verbunden und gibt an die Auswerteeinrichtung ein Spannungssignal aus, das proportional zu dem oberhalb des kondensierten Arbeitsfluides im Kondensatspeicher 1 und entsprechend im Beruhigungsbehälter 5 anliegenden Druckes P0 ist.

Die Auswerteeinrichtung bildet die Druckdifferenz ΔP = P1-P0 und berechnet daraus gemäß der Formel $h = \Delta P / (p \times g)$ die im Beruhigungsbehälter 5 und im Kondensatspeicher 1 vorliegende Füllstandshöhe. Die Auswerteeinrichtung gibt ein entsprechendes Ausgabesignal an die Füllstandsregeleinrichtung 4 aus. Dabei kann es sich gleichermaßen um ein analoges oder digitales Signal handeln. Das Ausgabesignal kann sowohl kontinuierlich als auch diskretisiert sein. Insbesondere kann das Ausgabesignal die Füllstandshöhe h in vorgegebenen Diskretisierungsstufen als h1, h2, h3 oder h4 anzeigen.

Im Ausführungsbeispiel ist das Ausgabesignal ein kontinuierliches Signal, das proportional zu der von der Füllstandserfassungseinrichtung erfassten Füllstandshöhe h ist. Die Füllstandsregeleinrichtung 4 umfasst einen Proportional-Integral-Differential(PID)-Regler, in den dieses Ausgabesignal als Ist-Größe eingeht. Der PID-Regler regelt entsprechend dieses Ausgabesignals die Fördermenge der Kondensatpumpe 9 so, dass die Kondensatpumpe bei niedriger bzw. sinkender Füllstandshöhe weniger, bei großer bzw. steigender Füllstandshöhe mehr kondensiertes Arbeitsfluid 10 aus dem Kondensatspeicher 1 abführt.

Im Ausführungsbeispiel liegen die untersten Bodenflächen des Kondensatspeichers 1 und des Beruhigungsbehälters 5 im Wesentlichen auf derselben geodätischen Höhe. Damit entspricht die im Beruhigungsbehälter 5 gemessenen Füllstandshöhe der im Kondensatspeicher 1 vorliegenden. Die Bodenfläche des Beruhigungsbehälters 5 kann jedoch auch unterhalb der Bodenfläche des Kondensatspeichers 1 angeordnet sein, so dass zwischen der im Beruhigungsbehälter 5 vorliegenden bzw. erfassten Füllstandshöhe und der im Kondensatspeicher 1 vorliegenden bzw. zu regelnden Füllstandshöhe ein konstanter Offset vorliegt. Gleichermaßen kann die unterste Bodenfläche des Beruhigungsbehälters 5 auch geodätisch über der untersten Bodenfläche des Kondensatspeichers 1 angeordnet sein. Sie sollte jedoch stets unterhalb der minimalen Füllstandshöhe h1 im Kondensatspeicher 1 vorgesehen sein, so dass auch bei minimaler Füllstandshöhe der erste Druckmessumformer 2 einen Druck P1 erfasst, der sich aufgrund der auf der Bodenfläche des Beruhigungsbehälters 5 lastenden Flüssigkeitssäule kondensierten Arbeitsfluides von dem durch den zweiten Druckmessumformer 3 erfassten zweiten Druck P0 unterscheidet und eine Druckdifferenzbildung zulässt.

Zur Filterung von Druckschwankungen, die andernfalls fälschlich als Füllstandshöhenänderungen interpretiert würden, können vor dem ersten und/oder zweiten Druckmessumformer Drosselblenden vorgesehen sein.

**Patentansprüche**

1. Kondensationsdampfturbine mit
   einem Kondensatspeicher (1) zur Speicherung von kondensiertem Arbeitsfluid (10) der Kondensationsdampfturbine; und
   einer Füllstanderfassungseinrichtung zur Erfassung des Füllstandes im Kondensatspeicher;
   wobei die Füllstanderfassungseinrichtung
   eine erste Druckerfassungseinrichtung (2) zur Erfassung eines ersten Druckes (P1) des kondensierten Arbeitsfluides (10) in einer ersten Höhe im Kondensatspeicher;

eine zweite Druckerfassungseinrichtung (3) zur Erfassung eines zweiten Druckes (P0) oberhalb einer zweiten Höhe im Kondensatspeicher; und eine Auswerteeinrichtung zur Bildung der Druckdifferenz (ΔP) zwischen erstem und zweitem Druck und zur Ausgabe eines dieser Druckdifferenz entsprechenden Ausgabesignals umfasst,

wobei die erste und/oder zweite Druckerfassungseinrichtung einen Druckmessumformer umfasst, der dazu geeignet ist, einen auf einer Erfassungsfläche lastenden Druck in ein analoges oder digitales Strom- bzw. Spannungssignal umzuwandeln,

wobei der Druckmessumformer (2), zusammen mit seiner Erfassungsfläche, über einen Flanschanschluss mit der ersten und/oder zweiten Druckerfassungseinrichtung (2, 3) austauschbar verbunden ist, wobei der Flanschanschluss mit der Erfassungsfläche an einer Druckmessstelle mit dem Kondensatspeicher (1) bzw. dem Beruhigungsbehälter (5) einfach verbindbar ist,

wobei der Beruhigungsbehälter (5) mit dem Kondensatspeicher (1) kommuniziert, und der Druck in diesem Beruhigungsbehälter durch die erste und/oder zweite Druckerfassungseinrichtung (2, 3) erfassbar ist.

2. Kondensationsdampfturbine nach Anspruch 1, **dadurch gekennzeichnet, dass** der Beruhigungsbehälter (5) mit dem Kondensatspeicher (1) über eine erste und eine darüber angeordnete zweite Leitung (7, 8) kommuniziert.

3. Kondensationsdampfturbine nach Anspruch 2, **dadurch gekennzeichnet, dass** in der ersten und/oder zweiten Leitung eine Drosselstelle, insbesondere eine Blende (7a, 8a) angeordnet ist.

4. Kondensationsdampfturbine nach einem der vorhergehenden Ansprüche, **dadurch gekennzeichnet, dass** sie weiter eine aus dem Kondensatspeicher fördernde Kondensatpumpe (9) und eine Füllstandsregeleinrichtung (4) umfasst, die dafür geeignet ist, dass sie das Ausgabesignal von der Auswerteeinrichtung erhält und in Abhängigkeit von diesem Ausgabesignal die Kondensatpumpe betreibt.

5. Verfahren zur Regelung des Füllstandes in einem Kondensatspeicher (1) einer Kondensationsdampfturbine nach einem der vorhergehenden Ansprüche, mit den Schritten:

(a) Erfassung des ersten Druckes (P1) des kondensierten Arbeitsfluides in einer ersten Höhe im Kondensatspeicher durch die erste Druckerfassungseinrichtung (2);

(b) Erfassung des zweiten Druckes (P0) oberhalb einer zweiten Höhe im Kondensatspeicher durch die zweite Druckerfassungseinrichtung (3);

(c) Bildung der Druckdifferenz (ΔP) zwischen erstem und zweitem Druck durch die Auswerteeinrichtung;

(d) Ausgabe eines dieser Druckdifferenz entsprechenden Ausgabesignals an eine Füllstandsregeleinrichtung (4);

(e) Regelung der Zu- und/oder Abfuhr von kondensiertem Arbeitsfluid (10) in bzw. aus dem Kondensatspeicher (1) in Abhängigkeit von diesem Ausgabesignal.

6. Verfahren nach Anspruch 5, **dadurch gekennzeichnet, dass** in Schritt (e) die Füllstandsregeleinrichtung in Abhängigkeit von dem Ausgabesignal eine Kondensatpumpe (9) betreibt.

7. Verfahren nach Anspruch 5 oder 6, **dadurch gekennzeichnet, dass** bei einem Defekt einer der Druckerfassungseinrichtungen (2) nur der Druckmessumformer selber ausgetauscht werden muss.

## Claims

1. A condensing steam turbine with
a condensate reservoir (1) for storing condensed working fluid (10) of the condensing steam turbine; and
a filling level detection device for detecting the filling level in the condensate reservoir;
wherein the filling level detection device comprises a first pressure detection device (2) for detecting a first pressure (P1) of the condensed working fluid (10) at a first height in the condensate reservoir;
a second pressure detection device (3) for detecting a second pressure (P0) above a second height in the condensate reservoir; and
an evaluation device for forming the pressure differential (ΔP) between first and second pressure and for outputting an output signal corresponding to this pressure differential,
wherein the first and/or second pressure detection device comprises a pressure measurement transducer which is suited for converting a pressure applied to a detection surface into an analogue or digital current or voltage signal,
wherein the pressure measurement transducer (2), together with its detection surface is replaceably connected to the first and/or second pressure detection device (2, 3) via a flange connection, wherein the flange connection with the detection surface is simply connectable at a pressure measuring point to the condensate reservoir (1) or the calming vessel (5), wherein the calming vessel (5) communicates with the condensate reservoir (1) and the pressure in this calming vessel is detectable through the first and/or second pressure detection device (2, 3).

2. The condensing steam turbine according to claim 1, **characterized in that** the calming vessel (5) communicates with the condensate reservoir (1) via a first and a second line (7, 8) arranged above the former.

3. The condensing steam turbine according to claim 2, **characterized in that** in the first and/or the second line a throttle, in particular an orifice (7a, 8a) is arranged.

4. The condensing steam turbine according to any one of the preceding claims, **characterized in that**, furthermore, it comprises a condensate pump (9) delivering out of the condensate reservoir and a filling level regulating device (4) which is suited for receiving the output signal from the evaluation device and as a function of this output signal operates the condensate pump.

5. A method for regulating the filling level in a condensate reservoir (1) of a condensing steam turbine according to any one of the preceding claims, with the steps:

(a) detecting the first pressure (P1) of the condensed working fluid at a first height in the condensate reservoir through the first pressure detection device (2);
(b) detecting the second pressure (P0) above a second height in the condensate reservoir through the second pressure detection device (3);
(c) forming the pressure differential (ΔP) between first and second pressure through the evaluation device;
(d) outputting an output signal corresponding to this pressure differential to a filling level regulating device (4);
(e) regulating the supply and/or discharge of condensed working fluid (10) to or from the condensate reservoir (1) as a function of this output signal.

6. The method according to claim 5, **characterized in that** in step (e) the filling level regulating device operates a condensate pump (9) as a function of the output signal.

7. The method according to claim 5 or 6, **characterized in that** in the event of a defect of one of the pressure detection devices (2), only the pressure measuring transducer itself has to be replaced.

**Revendications**

1. Turbine à vapeur de condensation comportant
un dispositif de stockage de condensat (1) pour stocker un fluide de travail condensé (10) de la turbine à vapeur de condensation ; et
un dispositif de saisie de niveau pour saisir le niveau de remplissage dans le dispositif de stockage de condensat ;
dans lequel le dispositif de saisie de niveau comprend
un premier dispositif de saisie de pression (2) pour détecter une première pression (P1) du fluide de travail condensé (10) dans une première hauteur dans le dispositif de stockage de condensat ;
un deuxième dispositif de saisie de pression (3) pour détecter une deuxième pression (P0) au-dessus d'une deuxième hauteur dans le dispositif de stockage de condensat ; et
un dispositif d'évaluation pour former la différence de pression (ΔP) entre une première et deuxième pression et pour émettre un signal d'émission correspondant à cette différence de pression,
dans laquelle le premier et/ou deuxième dispositif de saisie de pression comprend un convertisseur de mesure de pression, qui est approprié pour convertir une pression pesant sur une surface de saisie en un signal de courant respectivement tension analogique ou numérique, dans laquelle le convertisseur de mesure de pression (2) conjointement à sa surface de détection est relié de manière remplaçable par l'intermédiaire d'raccord de bride avec le premier et/ou deuxième dispositif de saisie de pression (2, 3), dans laquelle le raccord de bride peut être relié simplement avec la surface de saisie sur un point de mesure de pression avec le dispositif de stockage de condensat (1) respectivement le réservoir de stabilisation (5),
dans laquelle le réservoir de stabilisation (5) communique avec le dispositif de stockage de condensat (1) et la pression dans ce réservoir de stabilisation peut être saisie par le premier et/ou deuxième dispositif de saisie de pression (2, 3).

2. Turbine à vapeur de condensation selon la revendication 1, **caractérisée en ce que** le réservoir de stabilisation (5) communique avec le dispositif de stockage de condensat (1) par l'intermédiaire d'une première et une deuxième ligne disposée par-dessus (7, 8).

3. Turbine à vapeur de condensation selon la revendication 2, **caractérisée en ce que** dans la première et/ou deuxième turbine un point d'étranglement, notamment un diaphragme (7a, 8a) est disposé.

4. Turbine à vapeur de condensation selon une des revendications précédentes, **caractérisée en ce**

**que** elle comprend en outre une pompe à condensat (9) refoulant à partir du dispositif de stockage de condensat et un dispositif de saisie de niveau (4), qui est approprié **en ce qu'**il obtient le signal d'émission provenant du dispositif d'évaluation et met en fonctionnement la pompe à condensat en fonction de ce signal d'émission.

**5.** Procédé de régulation du niveau dans un dispositif de stockage de condensat (1), d'une turbine à vapeur de condensation selon une des revendications précédentes, avec les étapes de :

(a) saisie de la première pression (P1) du fluide de travail condensé dans une première hauteur dans le dispositif de stockage de condensat par le premier dispositif de saisie de pression (2) ;
(b) saisie de la deuxième pression (P0) au-dessus d'une deuxième hauteur dans le dispositif de stockage de condensat par le deuxième dispositif de saisie de pression (3) ;
(c) formation de la différence de pression ($\Delta P$) entre une première et une deuxième pression par le dispositif d'évaluation ;
(d) émission d'un signal d'émission correspondant à cette différence de pression sur un dispositif de saisie de niveau (4) ;
(e) régulation de l'amenée et/ou l'évacuation du fluide de travail condensé (10) dans respectivement hors du dispositif de stockage de condensat (1) en fonction de ce signal d'émission.

**6.** Procédé selon la revendication 5, **caractérisé en ce qu'**à l'étape (e) le dispositif de saisie de niveau met en fonctionnement en fonction du signal d'émission une pompe à condensat (9).

**7.** Procédé selon la revendication 5 ou 6, **caractérisé en ce qu'**en présence d'une défaillance d'un des dispositifs de saisie de pression (2) seul le convertisseur de mesure de pression même doit être remplacé.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4022544 A1
- DE 2816636
- US 4202367 A
- DE 1113459